**Europäisches Patentamt**

**European Patent Office**

**Office européen des brevets**

(19)

(11) Veröffentlichungsnummer: **0 101 834 B1**

# (12) EUROPÄISCHE PATENTSCHRIFT

(45) Veröffentlichungstag der Patentschrift:
19.11.87

(21) Anmeldenummer: 83106480.3

(22) Anmeldetag: 02.07.83

(51) Int. Cl.⁴: **F 02 M 51/04, F 02 M 63/00, F 04 D 11/00, F 16 N 31/00, F 16 H 57/04**

(54) Elektrische Steuereinrichtung für Kraftstoffeinspritzpumpen für Brennkraftmaschinen.

(30) Priorität: 30.07.82 DE 3228513
15.03.83 DE 3309181

(43) Veröffentlichungstag der Anmeldung:
07.03.84 Patentblatt 84/10

(45) Bekanntmachung des Hinweises auf die Patenterteilung:
19.11.87 Patentblatt 87/47

(84) Benannte Vertragsstaaten:
AT DE FR GB IT

(56) Entgegenhaltungen:
DE - A - 2 417 767
DE - U - 1 989 640
US - A - 2 223 758
US - A - 2 848 284
US - A - 3 065 822

Soviet Inventions Illustrated Week B 21, 4 July 1979
Sections Q 62, Q 68 & SU-A-615310

(73) Patentinhaber: ROBERT BOSCH GMBH, Postfach 50,
D-7000 Stuttgart 1 (DE)

(72) Erfinder: Böhm, Martin, Kräherstrasse 17,
D-7000 Stuttgart 30 (DE)
Erfinder: Krämer, Manfred, Dipl.-Ing., Paradiesweg 25,
D-7141 Schwieberdingen (DE)
Erfinder: Schwartz, Reinhard, Dipl.-Ing.,
Rankestrasse 30, D-7000 Stuttgart 75 (DE)

## Beschreibung

Stand der Technik

Die Erfindung geht aus von einer elektrischen Steuereinrichtung für Kraftstoffeinspritzpumpen für Brennkraftmaschinen nach dem gattungsbildenden Oberbegriff des Patentanspruchs 1.

Für Kraftstoffeinspritzpumpen und deren Regler wird heute überwiegend eine wartungsfreie Schmierung, z.B. eine Motorschmierung, derart verwendet, dass die Pumpen an den Schmierölkreislauf der Brennkraftmaschine angeschlossen sind. Die Pumpe ist nach aussen gegen austretendes Schmieröl möglichst gut abzudichten. Dies bereitet dort, wo die zum Antrieb der einzelnen Pumpenkolben dienende Nockenwelle aus dem Pumpengehäuse herausgeführt ist, keine grösseren Schwierigkeiten, weil sich das betreffende Nockenwellenlager gegenüber dem Gehäuse eines anschliessenden elektrischen Stellwerks mit enthaltenem Stellglied abdichten lässt. Auch die Regelstange, die zur Regelung der Fördermenge der Einspritzpumpe dient, ist aus dem Pumpengehäuse im Bereich einer Regelstangenführung herausgeführt. In diesem Bereich ist eine Abdichtung gegen austretendes Schmieröl sehr schwierig, denn die Regelstange muss im Bereich ihrer Führung ohne jegliche Hemmung und leichtgängig beweglich sein. Wenn die Regelstange schwergeht oder klemmt, ist die Regelung gestört und im übrigen nicht stabil. Aus diesen Gründen werden an dieser Stelle keine, einen Reibungswiderstand beim Bewegen der Regelstange erzeugende Dichtelemente eingesetzt. Deshalb dringt durch die Regelstangenführung zwischen Einspritzpumpe und elektrischem Stellwerk in geringen Mengen auch bei abgedichtetem Nockenwellenlager Schmieröl aus dem Pumpengehäuse ein, was zu allmählich steigendem Ölstand im Inneren des Stellwerks führt. Vor allem bei extremen Schräglagen der Einspritzpumpe besteht daher die Gefahr, dass durch dieses Schmieröl sich bewegende Bauteile überflutet und dadurch in ihrer Funktion gestört oder ganz blockiert werden.

Eine elektrische Steuereinrichtung, die weitgehend die Merkmale der gattungsgemässen Bauart aufweist, ist aus der ATZ-Automobiltechnische Zeitschrift 83 (1981), Heft 10, Seiten 516 und 520, insbesondere Bild 4, bekannt. Bei der dort gezeigten Reiheneinspritzpumpe ist keine Abdichtung im Bereich des stellwerkseitigen Nockenwellenlagers vorhanden, so dass die vorstehend beschriebenen Probleme in verstärktem Masse auftreten. Ist hier allerdings eine Abdichtung erforderlich, so kann ohne weiteres ein bei getrenntem Ölhaushalt von Einspritzpumpe und Regler allgemein bekannter und üblicher Wellendichtring eingebaut werden. Aus der US-A-2 223 758 ist eine Steuereinrichtung mit einem einen Stellmagneten umfassenden elektrischen Stellwerk bekannt, das lediglich der Abschaltung einzelner Pumpenelemente dient und kein im Inneren des Stellwerkgehäuses umlaufend von der Nockenwelle angetriebenes Rotationsteil aufweist. Die Fördermengensteuerung wird durch ein pneumatisch vom Unterdruck im Ansaugrohr der Brennkraftmaschine betätigtes Membranstellglied eines Membranreglers bewirkt.

Aus der DE-A-24 17 767 ist nun eine Steuereinrichtung bekannt, die alle im Oberbegriff des Patentanspruchs 1 angegebenen Merkmale aufweist und bei der zusätzlich an der Regelstangendurchführung zum Stellwerkgehäuse ein Faltenbalg angeordnet ist, der aber aufgrund seiner Formsteifigkeit und des in seinem Inneren sich ansammelnden Schmieröls die Regelbewegungen der Regelstange und damit die dynamischen Werte, d.h. die Ansprechempfindlichkeit der Steuereinrichtung negativ beeinflussen kann.

Ziel der Erfindung ist es, eine elektrische Steuereinrichtung für Kraftstoffeinspritzpumpen, insbesondere ein elektrisches Stellwerk, zu schaffen, bei der dafür Sorge getragen ist, dass die darin enthaltenen Elemente nicht mit Schmieröl überflutet werden, welches aus der Einspritzpumpe unvermeidbar austritt. Dabei soll diese Überflutung mit möglichst einfachen und billigen Mitteln und möglichst fortwährend im Betrieb verhindert werden, so dass dann, wenn die Einspritzpumpe stillgesetzt wird und abkühlen kann, gar nicht erst ausgetretenes Schmieröl mit grösserem, evtl. schädlichem Niveau vorhanden ist oder noch anfällt.

Vorteile der Erfindung

Bei der erfindungsgemässen elektrischen Steuereinrichtung mit den kennzeichnenden Merkmalen des Patentanspruchs 1 wird durch die Absaugvorrichtung erreicht, dass Schmieröl, welches aus der Einspritzpumpe austritt und in das Gehäuse des Stellwerks eintritt, fortwährend bei Betrieb abgesaugt und in die Einspritzpumpe zurückgeleitet wird. Auf diese Weise ist dafür Sorge getragen, dass sich im Gehäuse des Stellwerks gar nicht erst ein Schmiermittelsumpf höheren Niveaus bilden kann, der z.B. bei extremen Schräglagen eine Überflutung von Teilen zur Folge haben könnte. Durch das gemäss Merkmal a verwendete Rotationsteil ergibt sich für diese erfindungsgemässe Einrichtung eine besonders einfache Ausbildung, da der Antrieb der Absaugvorrichtung direkt von der ohnehin vorhandenen und umlaufenden Nockenwelle der Einspritzpumpe besorgt wird. Durch die Kombination aller Merkmale des Patentanspruchs 1 ist eine besonders einfache, kostengünstige und verschleissarme Absaugvorrichtung erreicht. Diese hat keine bewegten Teile, sieht man vom Rotationsteil ab, die einem Verschleiss unterliegen könnten. Da die miteinander zusammenwirkenden Kontaktflächen des Rotationsteiles einerseits und des feststehenden Flächenelementes andererseits fortwährend mit Schmieröl in Berührung stehen, baut sich wegen des flachen, mindestens annähernd parallel zur Oberfläche des Rotationsteiles angeordneten Spaltes ein von Drucklagern her bekannter Ölfilmdruck auf, der schon bei kleinen Drehzahlen zwischen der Kontaktfläche des Gleitschuhes und der Aussenfläche des Rotationsteiles einen verschleissverhindernden Schmierfilm bildet. Damit sich auch bei niedrigen Drehzahlen die für die erforderliche Saugwirkung benötigte Druckdifferenz aufbauen kann, ist das im Merkmal d angeführte Rückschlagventil vorgesehen. Dadurch ist die Absaugvorrichtung selbstansaugend. Das Rückschlagventil verhindert ausserdem einen Ölrücklauf bei stehender Absaugpumpe. Durch den Andruck des Gleitschuhs mittels der Andrückfeder, z.B. in Gestalt einer zylindrischen Schraubenfeder, ist einerseits eine bestimmbare Anpresskraft vorgegeben, die auch eingestellt werden kann. Mit Vorteil ist ausserdem ein selbstregelndes, drehzahlabhängiges Verhalten der Absaugvorrichtung erreicht mit selbsttätiger Begrenzung des Förderdruckes. Wird nämlich der Förderdruck zu gross, z.B. bei zu hoher Drehzahl des Rotationsteiles, so wird der Gleitschuh unter Überwindung der Anpresskraft der Andrückfeder dann vom Rotationsteil weggedrückt, wenn das Produkt aus Druck und wirksamer Fläche die Anpresskraft überwiegt.

Mit den in den Unteransprüchen aufgeführten Massnahmen sind vorteilhafte Weiterbildungen und Ausgestaltungen der Absaugvorrichtung bei der im Patentanspruch 1 festgelegten elektrischen Steuereinrichtung erzielbar. So wird gemäss den Merkmalen des Anspruchs 2 eine günstige und raumsparende Bauweise erzielt.

Von besonderem Vorteil ist ferner die Gestaltung gemäss Anspruch 5. Dadurch ist verhindert, dass bei Stillstand der Einspritzpumpe infolge einer Undichtigkeit der Absaugvorrichtung, insbesondere des Rückschlagventiles oder der Ableitung, Schmieröl aus der Einspritzpumpe austreten und in das Stellwerk gelangen kann. Vorteilhafte weitere Gestaltungen enthalten die Ansprüche 6 bis 9. Dadurch ist die Absaugvorrichtung besonders kostengünstig, einfach und montagefreundlich gestaltet.

Eine weitere besonders vorteilhafte Ausbildung ergibt sich aus Anspruch 11. Ein solcher einteiliger Gleitschuh ist sehr einfach und billig. Da der Spalt nicht unbedingt keilförmig sein muss, sondern vielmehr auch ein hinsichtlich seiner Tiefe gleichbleibender Spalt ausreichend ist, z.B. mit einer Tiefe zwischen 0,3 mm und 0,5 mm, kann dieser einteilige Gleitschuh besonders flach und als schmales Scheibenteil gestaltet sein, der dadurch billig ist und einen äusserst geringen Platzbedarf hat. Von Vorteil ist es, wenn die Andrückfeder etwa im Bereich des Spaltes und dort etwa mittig plaziert und z.B. am Scheibenteil zentriert ist.

Das Teilmerkmal a aus dem Kennzeichenteil des Patentanspruchs 1 ist, allerdings in abgewandelter Form, aus dem Stand der Technik, insbesondere aus dem DE-U-1 989 640 bekannt; und ein unter der Kraft einer Andrückfeder stehendes, von einem Gleitschuh gebildetes Element ist in der entgegengehaltenen SU-A-615 310 (siehe auch «Soviet Inventions Illustrated Week B21, 4th July 1979, Section Q 62, Q 68») für eine völlig andere Aufgabe beschrieben.

Beim Gegenstand des entgegengehaltenen DE-U-1 989 640 handelt es sich, wie auch bei ähnlichen Vorrichtungen für Getriebe, um eine Ölabstreifvorrichtung, die nur bei relativ hohen und gleichförmigen Drehzahlen die gewünschte Steighöhe im Steigrohr erzeugt; und bei dem federnd gegen die Welle gedrückten Gleitschuh aus der SU-A-615 310 handelt es sich auch nur um eine Abschöpfvorrichtung die kurzfristig beim Anlauf des Motors wirksam ist und bei erhöhtem Öldruck vollständig abschaltet, da auch nur während der Anlaufphase der Schmierfilmdruck gemessen werden soll.

Zeichnung

Zwei Ausführungsbeispiele der Erfindung sind nachstehend anhand der Zeichnung beschrieben. Es zeigen

Figur 1 einen schematischen Schnitt von Teilen des Gehäuses einer Kraftstoffeinspritzpumpe und eines Stellwerkes dafür, versehen mit einer Absaugvorrichtung gemäss einem ersten Ausführungsbeispiel,

Figur 2 eine schematische perspektivische Explosionsdarstellung der einzelnen Elemente der Absaugvorrichtung in Figur 1,

Figur 3 eine schematische perspektivische Unteransicht eines Gleitschuhteiles der Ansaugvorrichtung in Figur 1,

Figur 4 einen schematischen Schnitt entsprechend demjenigen in Figur 1 mit einer Absaugvorrichtung gemäss einem zweiten Ausführungsbeispiel, im Schnitt entlang der Linie IV–IV in Figur 5,

Figur 5 eine schematische Ansicht in Richtung des Pfeiles V in Figur 4,

Figur 6 einen Schnitt des Gleitschuhs entlang der Linie VI–VI in Figur 5.

Beschreibung der Ausführungsbeispiele

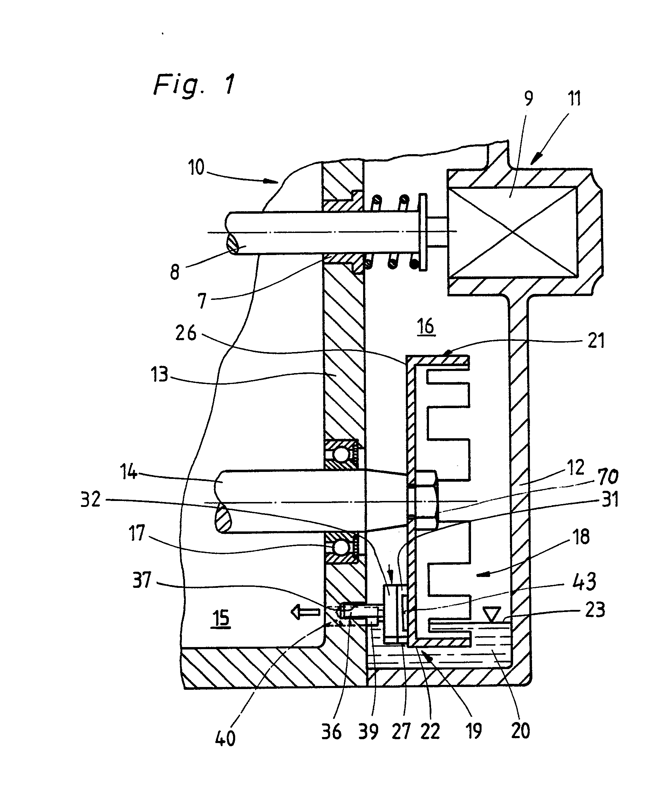

An eine in Figur 1 nur schematisch angedeutete Kraftstoffeinspritzpumpe 10 ist ein Stellwerk 11 mit seinem Gehäuse 12 angesetzt. Einzelheiten der Kraftstoffeinspritzpumpe 10 sind geläufig, so dass auf deren Darstellung und Erörterung verzichtet werden kann. In herkömmlicher Weise weist die Einspritzpumpe 10 eine durch ihr Gehäuse 13 in einer Regelstangenführung 7 hindurchgeführte Regelstange 8 zur Regelung der Fördermenge auf, die von einem innerhalb des Gehäuses 12 des Stellwerkes 11 angeordneten, vereinfacht dargestellten Stellmagneten 9 betätigt wird. Die Regelstange 8 ist innerhalb der Regelstangenführung 7 möglichst spielfrei und leichtgängig verschiebebeweglich, damit eine leichtgängige Verstellung erfolgen kann, denn wenn die Regelstange 8 schwergeht oder klemmt, ist die Regelung gestört und nicht stabil. In der Regel ist die Kraftstoffeinspritzpumpe 10 zur Schmierung ihrer Teile z.B. ihrer Nockenwelle 14, die dem Antrieb der einzelnen, nicht gezeigten Pumpenkolben dient, an den Schmierölkreislauf der Brennkraftmaschine angeschlossen, so dass im Inneren 15 des Gehäuses 13 Schmieröl enthalten ist. Das Innere 16 des Gehäuses 12 des Stellwerkes 11 ist dagegen abzudichten. Demgemäss ist das Nockenwellenlager 17 im Gehäuse 13 in herkömmlicher Weise abgedichtet. Durch die beschriebene Regelstangenführung 7 zwischen der Einspritzpumpe 10 und dem Stellwerk 11 dringt jedoch noch Schmieröl, wenn auch in geringen Mengen, in das Innere 16 des Gehäuses 12 ein, wodurch der Ölstand allmählich steigt. Erfahrungen haben gezeigt, dass dann, wenn die Einspritzpumpe 10 in extremer Schräglage stillgesetzt und abgekühlt wird, sich hiernach im Kaltstartfall bei ölüberflutetem Stellmagneten 9 Startschwierigkeiten ergeben können, weil die zur Verfügung stehenden Stellkräfte des Stellmagneten 9 dann zu gering sind, um die Regelstange 8 ausreichend schnell zu betätigen.

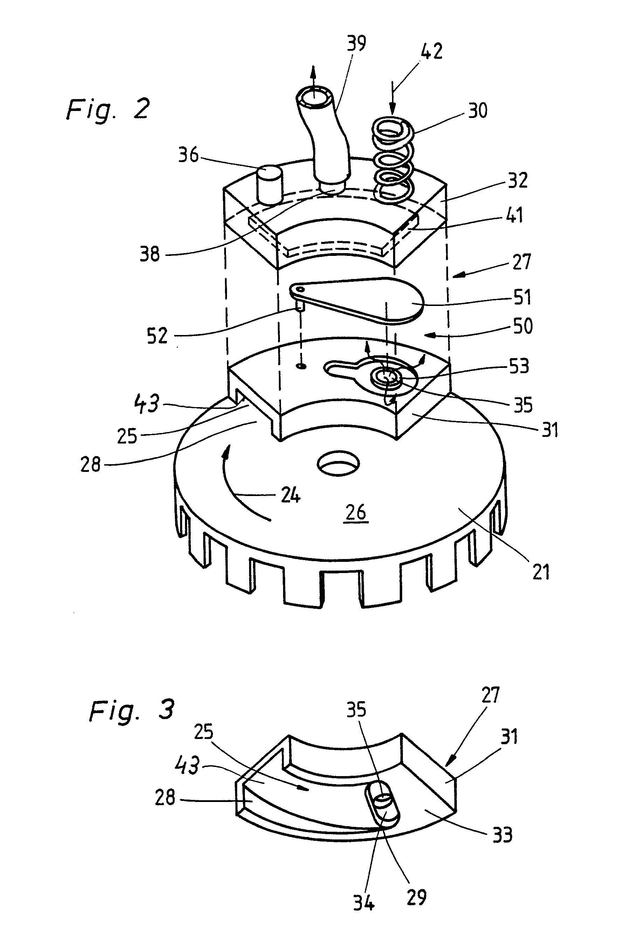

Eine derartige Überflutung des Stellmagneten 9 mit Schmieröl auch bei extremen Schräglagen ist dadurch verhindert, dass innerhalb des Gehäuses 12 des Stellwerkes 11 eine Absaugvorrichtung 18 angeordnet ist, die von der Einspritzpumpe 10 her eindringendes Schmieröl aus dem Gehäuse 12 absaugt und wieder in das Innere 15 der Einspritzpumpe 10 zurückleitet. Die Absaugvorrichtung 18 weist eine Absaugpumpe 19 auf, die saugseitig mit dem bodennahen Bereich 20 im Inneren 16 und druckseitig mit dem Inneren 15 des Gehäuses 13 der Einspritzpumpe 10 in Verbindung steht. Die Absaugpumpe 19 wird in besonders einfacher Weise von der Nockenwelle 14 der Einspritzpumpe 10 angetrieben. Sie weist ein auf der Nockenwelle 14 drehfest angeordnetes, hier als Impulsrad 21 eines Drehzahlgebers dargestelltes Rotationsteil auf, das mit zumindest einem bodennahen Umfangsabschnitt 22 in einen Sumpf 23 des eingedrungenen Schmieröls eintaucht. Die Umlaufrichtung des Impulsrades 21 zeigt der Pfeil 24 in Figur 2.

Die Absaugvorrichtung 18 weist im Bereich des in den Sumpf 23 eintauchenden, bodennahen Umfangsabschnittes 22, zweckmässigerweise an der am tiefsten liegenden Umfangsstelle, des Impulsrades 21 einen Spalt 25 auf, der von einer pumpenseitigen Stirnfläche 26 auf der Aussenfläche des Impulsrades 21 einerseits und von einem feststehenden Flächenelement 27 andererseits gebildet und begrenzt ist. Der Spalt 25 verjüngt sich wie ein von Axialdrucklagern her bekannter Schmierkeil in Umlaufrichtung (Pfeil 24) des Impulsrades 21 von einem offenen Ende 28 bis hin zu einem geschlossenen Ende 29, wie insbesondere Figur 3 zeigt. Das rückseitig des Impulsrades 21 angeordnete Flächenelement 27 besteht aus einem zweiteiligen Gleitschuh 70 mit zwei z.B. durch Kleben fest zusammengefügten und gegen die Stirnfläche 26 mittels einer Andrückfeder 30 gedrückten Gleitschuhteilen 31 und 32, die beide gleiche Konturen und Grösse haben und z.B. als Ringsegmente gestaltet sind. Der erläuterte Spalt 25 ist dabei innerhalb des dem Impulsrad 21 am nächsten liegenden Gleitschuhteils 31 enthalten, der dazu auf seiner mit der Stirnfläche 26 zusammenwirkenden Kontaktfläche 33 eine flache, rinnenförmige Vertiefung 43 U-förmigen Querschnitts aufweist, deren Tiefe vom offenen Ende 28 zum geschlossenen Ende 29 hin keilförmig abnimmt. Im Bereich des geschlossenen Endes 29 mündet der Spalt 25 in eine quergerichtete Tasche 34 grösseren Querschnitts aus, die ihrerseits mit einem achsparallel verlaufenden Abfuhrkanal 35 in Verbindung steht.

Beide Gleitschuhteile 31, 32 sind in Richtung rechtwinklig zur Stirnfläche 26 fest miteinander verbunden und am Gehäuse 13 in besagter Richtung verschieblich geführt. Dazu trägt der eine Gleitschuhteil 32 auf seiner dem Impulsrad 21 abgewandten Rückenfläche zumindest einen Führungsstift 36, der in eine gehäuseseitige Führungsbohrung 37 eingreift. Dem Führungsstift 36 benachbart ist ein Ableitungsstutzen 38, auf den ein Ableitungsschlauch bzw. -rohr 39 aufgesteckt ist, der durch eine Bohrung 40 im Gehäuse 13 in deren Inneres 15 führt. Auf der zum Impulsrad 21 hinweisenden Seite enthält der Gleitschuhteil 32 einen eingetieften Sammelraum 41, der einerseits mit dem Abführkanal 35 im Gleitschuhteil 31 und andererseits mit einer von dem Ableitungsstutzen 38 und Ableitungsschlauch 39 gebildeten Ableitung in Verbindung steht.

Die Absaugvorrichtung 18 weist zumindest ein Rückschlagventil 50 auf, das nur eine Rückleitung vom Inneren 16 zum Inneren 15 zurück ermöglicht, in Gegenrichtung hingegen sperrt. Das Rückschlagventil 50 befindet sich auf der Druckseite der Absaugvorrichtung 18 und öffnet zum Inneren 15 hin. Es ist beim gezeigten Ausführungsbeispiel innerhalb des zweiteiligen Gleitschuhes 70 angeordnet und als Flatterventil ausgebildet. Dieses weist ein Flatterglied 51 auf, das zwischen beiden Gleitschuhteilen 31, 32 gehalten ist und die Ausmündung des Abfuhrkanales 35 des einen Gleitschuhteiles 31 in den Sammelraum 41 des anderen Gleitschuhteiles 32 steuert. Das Flatterglied 51 ist mittels Bolzen 52 auf der dem Impulsrad 21 abgewandten Rückseite des einen Gleitschuhteils 31 fixiert. Diese Rückseite ist im Bereich des Ausmündungsendes des Abfuhrkanales 35 etwa schlüssellochähnlich ausgearbeitet, unter Bildung einer ringförmigen Dichtfläche 53 für das Flatterglied 51.

In das Innere 16 des Stellwerks 11 aus dem Gehäuse 13 der Einspritzpumpe 10 gelangendes Schmieröl wird mit Umlauf der Nockenwelle 14 durch das mitumlaufende Impulsrad 21 in Umlaufrichtung (Pfeil 24) mitgenommen, da das Schmieröl am Impulsrad 21 haftet. Das Schmieröl gelangt in das Innere des Spaltes 25 und sammelt sich in der Tasche 34. Im Spalt 25 baut sich ein Druck auf, der das Schmieröl unter Abheben des Flattergliedes 51 von der Dichtfläche 53 aus dem Abfuhrkanal 35 in den Sammelraum 41 des Gleitschuhteiles 32 fördert. Das Schmieröl gelangt über den Ableitungsstutzen 38 und den Ableitungsschlauch 39 zurück in das Innere 15 der Einspritzpumpe 10. Wird der Förderdruck zu gross, z.B. bei zu hoher Drehzahl der Nockenwelle 14, so hebt das Flächenelement 27 von der Stirnfläche 26 des Impulsrades 21 gegen die Wirkung der Andrückfeder 30 dann ab, wenn das Produkt aus Öldruck im Spalt 25 und Wirkfläche die Anpresskraft (siehe Pfeil 42 in Figur 2) der Andrückfeder 30 übersteigt.

Die beiden Gleitschuhteile 31, 32 bestehen mit Vorteil aus Kunststoffspritzteilen. Die Absaugvorrichtung 18 eignet sich vorwiegend für geringere Fördermenge und geringere Drücke. Sie ist einfach im Aufbau und ausserordentlich billig. Da sie keine bewegten Teile, sieht man von dem mitumlaufenden Impulsrad 21 ab, besitzt, ist der Verschleiss vernachlässigbar gering. Auch die Gestaltung des Rückschlagventils 50 ist ausserordentlich einfach, funktionssicher und kostengünstig. Dadurch ist mit einfachen Mitteln die Verdrängung sich im Spalt 25 ansammelnden Schmieröls ermöglicht und zugleich eine Dichtheit gewährleistet. Die beschriebene Absaugvorrichtung 18 verhindert, dass der Stellmagnet im Inneren 16 des Stellwerks 11 auch bei extremen Schräglagen der Einspritzpumpe 10 von Schmieröl (Sumpf 23) überflutet wird und dadurch Startschwierigkeiten hervorgerufen werden könnten.

Die gewählte Form und Anordnung des Gleitschuhes 70 an der Stirnfläche 26 des Impulsrades 21 stellt ein besonders raumsparendes und bei eingebautem Drehzahlgeber vorteilhaft billiges Ausführungsbeispiel dar. Selbstverständlich kann die mit den Gleitschuhteilen 31, 32 zusammenwirkende Aussenfläche am Rotationsteil sowohl von einer der Stirnflächen als auch von der Mantelfläche eines beliebigen, mit der Nockenwelle 14 verbundenen und angetriebenen Bauteiles gebildet sein, das z.B. vorzugsweise scheibenförmig, zylinderförmig, kapselförmig oder ähnlich gestaltet ist. Im Falle der Anlage an einer Mantelfläche sind der Gleitschuh und sein Spalt entsprechend gekrümmt ausgebildet.

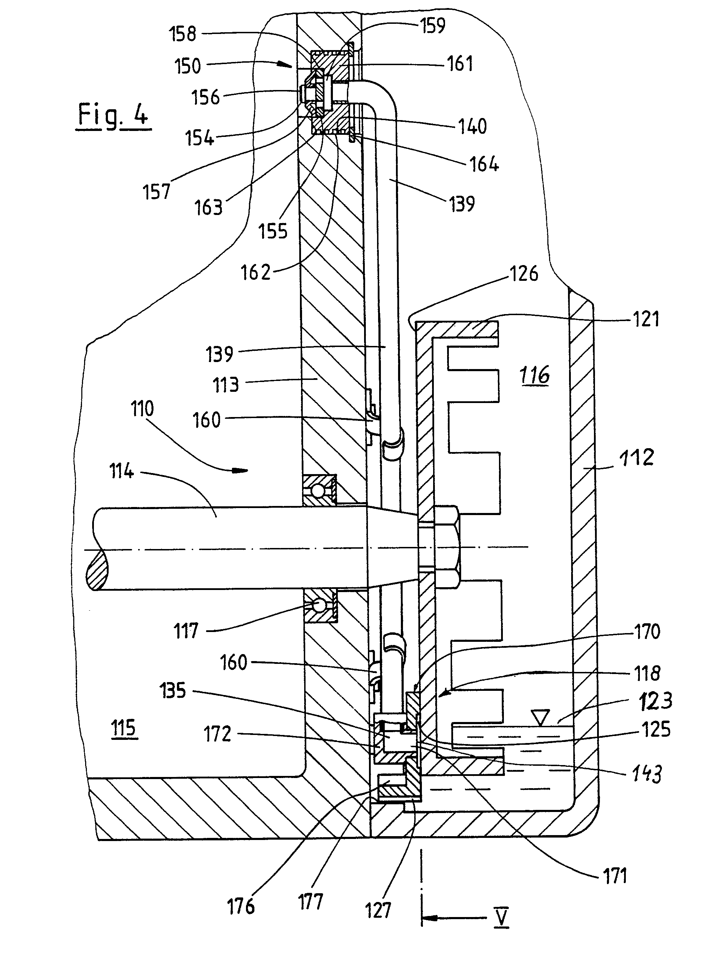

Bei dem in Figur 4 bis 6 gezeigten zweiten Ausführungsbeispiel sind für die Teile, die dem ersten Ausführungsbeispiel entsprechen, um 100 grössere Bezugszeichen verwendet, so dass dadurch zur Vermeidung von Wiederholungen auf die Beschreibung des ersten Ausführungsbeispieles Bezug genommen ist.

Die im Inneren 116 des Stellwerkgehäuses 112 befindliche Absaugvorrichtung 118 mündet druckseitig in einem Abstand zum Nockenwellenlager 117 oberhalb dieses Nockenwellenlagers 117 in das Innere 115 der Einspritzpumpe 110 ein. An der Einmündungsstelle ist im Gehäuse 113 eine Bohrung 140 enthalten, zu der ein Ableitungsschlauch 139 führt, der vom Flächenelement 127 ausgeht, im Bogen um das herausragende Ende der Nockenwelle 114 herumgeführt und bis zur Bohrung 140 hochgeführt ist. Der Ableitungsschlauch 139 ist mittels Halteklammern 160 am Gehäuse 113 fixiert. Er besteht z.B. aus einem Formteil aus einem Kunststoffmaterial, das elastisch und auch bei höheren Temperaturen noch formstabil ist. Am Einmündungsende trägt der Ableitungsschlauch 139 einen aufgesetzten Anschlussstopfen 161, der aus einem Kunststoffformteil besteht und z.B. durch Kleben am Ableitungsschlauch 139 befestigt ist. Der Anschlussstopfen 161 weist aussen eine Reihe von Ringnuten 162 auf und ist in die Bohrung 140 dicht eingesetzt, wobei die Ringnuten 162 zusammen mit der Bohrung 140 eine Labyrinthdichtung bilden.

Das Rückschlagventil 150 befindet sich im Bereich der Einmündungsstelle und besteht hier aus einem Gummi-Pilz-Ventil 154, das eine Lochscheibe 155 mit Haltestift 156 und einen elastischen Ventilteller 157 aus Gummi aufweist, der auf den Haltestift 156 aufgeknöpft ist. Der Ventilteller 157 deckt die Löcher der Lochscheibe 155 ab, vor allem bei einem Druckgefälle in Figur 4 nach rechts. In dazu gegensinniger Richtung hebt der Ventilteller 157 von der Lochscheibe 155 im Bereich der Löcher ab unter Freigabe des Durchganges. Die Lochscheibe 155 ist in eine Ringnut 158 des Anschlussstopfens 161 eingepasst und darin z.B. durch Kleben fixiert. Zwischen dem freien Ende des Ableitungsschlauches 139 und der Lochscheibe 155 befindet sich im Anschlussstopfen 161 ein Zwischenraum 159 für die Überleitung des Mediums. Der Anschlussstopfen 161 liegt in Figur 4 links an einer Schulter 163 des Gehäuses 113 an und ist mittels eines Sprengringes 164 am anderen Ende axial gesichert.

Das Flächenelement 127, welches über die am Gehäuse 113 abgestützte Andruckfeder 130 federelastisch gegen die pumpenseitige Stirnfläche 126 des Impulsrades 121 angedrückt ist, besteht hier, abweichend vom ersten Ausführungsbeispiel, in besonders einfacher Gestaltung aus einem einteiligen Gleitschuh 170, der als Kunststofformteil ausgebildet ist und die Form eines flachen Ringscheibenausschnittes hat. Der Gleitschuh 170 enthält auf seiner Kontaktfläche 133 den von einer Vertiefung 143 U-förmigen Querschnitts umfassten Spalte 125. Der Spalt 125 ist, abweichend vom ersten Ausführungsbeispiel, hinsichtlich der Spalttiefe gleichbleibend, also nicht keilförmig. Dabei hat sich eine geringe Spalttiefe, z.B. in der Grössenordnung zwischen 0,3 mm und 0,5 mm, als besonders vorteilhaft erwiesen. An dem mit 129 bezeichneten geschlossenen Ende des Spaltes 125, welches dem offenen Eintrittsende 128 gegenüberliegt, enthält der Gleitschuh 170 eine Bohrung 171, in die ein etwa winkelförmiges Anschlussstück 172 aus Kunststoff eingesetzt, insbesondere eingeklebt, ist. Das Anschlussstück 172 enthält den mit dem Spalt 125 kommunizierenden Abfuhrkanal 135, sitzt am in Figur 4 unteren Ende des Ableitungsschlauches 139 und bildet mit diesem zusammen die Ableitung.

Der einteilige Gleitschuh 170 hat in etwa Trapezform und ist an zwei gegenüberstehenden Ecken 176 von zwei in das Stellwerkgehäuse 112 eingearbeiteten Führungstaschen 177 umfasst, die eine Gleitführung für den Gleitschuh 170 bilden.

Auf der Symmetrieebene zwischen beiden Ecken 176 ist mittels eines Zentrieransatzes 173 die Andrückfeder 130 zentriert. Zur Zentrierung kann am Gehäuse 113 ein angeformter Vorsprung oder ein Zentrierstift 174 dienen, der in eine Bohrung 175 eingesteckt ist.

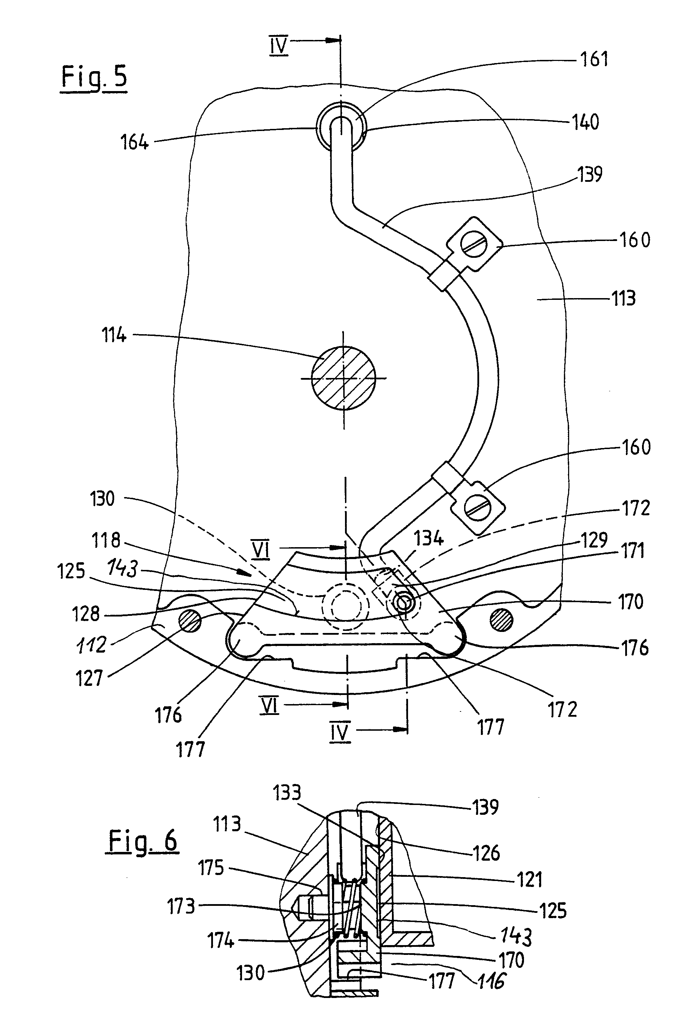

Wie beim ersten Ausführungsbeispiel, z.B. gemäss Figur 3, kann der Gleitschuh 170 an dem Ende 129 des Spaltes 125 mit einer in Figur 5 strichpunktiert angedeuteten Tasche 134 versehen sein, die als Sammeltasche für das aus dem Sumpf 123 abgesaugte und in die Bohrung 171 gedrückte Öl dient.

**Patentansprüche**

1. Elektrische Steuereinrichtung für Kraftstoffeinspritzpumpen für Brennkraftmaschinen mit einem mit seinem Gehäuse (12; 112) an das Gehäuse (13; 113) der Kraftstoffeinspritzpumpe (10; 110) angebauten elektrischen Stellwerk (11), das ein die Regelstange (8) der Einspritzpumpe (10; 110) betätigendes elektromechanisches Stellglied (Stellmagnet 9) und ein im Inneren (16; 116) des Stellwerkgehäuses (12; 112) umlaufend von der Nockenwelle (14; 114) der Einspritzpumpe angetriebenes Rotationsteil (Impulsrad 21; 121) umfasst und dessen Inneres (16; 116) gegenüber dem mit Schmieröl versorgten Inneren (15; 115) der Einspritzpumpe weitgehend, zumindest im Bereich des Durchtritts der Nockenwelle (14, 114) von der Einspritzpumpe zum Stellwerk (11), abgedichtet ist, gekennzeichnet durch folgende Merkmale:
a) im Inneren (16; 116) des Stellwerkgehäuses (12; 112) ist eine das von der Einspritzpumpe übertretende und in einem Sumpf (23; 123) sich sammelnde Schmieröl absaugende und in das Innere (15; 115) der Einspritzpumpe zurückfördernde Absaugvorrichtung (18; 118) angeordnet, die das mit einem bodennahen Umfangsabschnitt (22) in den Sumpf (23; 123) eintauchende Rotationsteil (Impulsrad 21; 121) und ein zwischen einer rinnenförmigen Vertiefung (43; 143) an seiner Oberfläche und einer Aussenfläche (Stirnfläche 26; 126) des Rotationsteiles einen Spalt (25; 125) bildendes Flächenelement (27; 127) umfasst,
b) das Flächenelement (27; 127) ist von einem unter der Kraft einer Andrückfeder (30; 130) mit einer die rinnenförmige Vertiefung (43; 143) enthaltenden Kontaktfläche (33; 133) federnd nachgiebig gegen die Aussenfläche des Rotationsteiles (21; 121) gedrückten Gleitschuh (70; 170) gebildet,
c) die den Spalt (25; 125) umfassende Vertiefung (43; 143) hat einen flachen, U-förmigen Querschnitt sowie eine geringe, mit Bezug zu seiner Kontaktfläche (33; 133) vom offenen Eintrittsende (28; 128) zu einem geschlossenen Ende (29; 129) in Umlaufrichtung (Pfeil 24) keilförmig kleiner werdende oder gleichbleibende Tiefe und ist an seinem geschlossenen Ende (29; 129) über einen Abfuhrkanal (35; 135) mit dem Inneren (15; 115) der Einspritzpumpe verbunden,
d) die Absaugvorrichtung (18; 118) weist druckseitig ein zum Inneren (15; 115) der Einspritzpumpe hin öffnendes Rückschlagventil (50; 150) auf.

2. Elektrische Steuereinrichtung nach Anspruch 1, dadurch gekennzeichnet, dass der Gleitschuh (70; 170) durch die Andrückfeder (30; 130) mit seiner Kontaktfläche (33; 133) an einer pumpenseitigen Stirnfläche (26; 126) auf der Aussenfläche des Rotationsteiles (21; 121) anliegend gehalten ist.

3. Elektrische Steuereinrichtung nach Anspruch 2, dadurch gekennzeichnet, dass der Gleitschuh (70; 170) in zu der Stirnfläche (26; 126) des Rotationsteils (21; 121) mindestens annähernd rechtwinkliger Richtung innerhalb des Stellwerkgehäuses (12; 112) verschieblich geführt ist.

4. Elektrische Steuereinrichtung nach einem der Ansprüche 1 bis 3, dadurch gekennzeichnet, dass der Spalt (25; 125) im Bereich seines geschlossenen Endes (29; 129) in eine Tasche (34; 134) grösseren Spaltquerschnitts ausmündet, die ihrerseits mit dem Abfuhrkanal (35; 135) in Verbindung steht.

5. Elektrische Steuereinrichtung nach einem der vorhergehenden Ansprüche, dadurch gekennzeichnet, dass die Absaugvorrichtung (118) druckseitig in einem Abstand zum Nockenwellenlager (117) oberhalb dieses Nockenwellenlagers (117) in das Innere (115) der Einspritzpumpe (110) einmündet.

6. Elektrische Steuereinrichtung nach Anspruch 5, dadurch gekennzeichnet, dass das Rückschlagventil (150) am Einmündungsende einer Ableitung (135, 139) und dort, wo diese in das Innere (115) der Einspritzpumpe (110) einmündet, angeordnet ist.

7. Elektrische Steuereinrichtung nach Anspruch 6, dadurch gekennzeichnet, dass die Ableitung (135, 139) aus einem am Gleitschuh (170) befindlichen Anschlussstück (172) und einem bis zur oberen Einmündungsstelle führenden Ableitungsschlauch (139) oder Rohr besteht.

8. Elektrische Steuereinrichtung nach Anspruch 7, dadurch gekennzeichnet, dass die Ableitung (135, 139) am Einmündungsende einen daran befestigten Anschlussstopfen (161) trägt, der in eine Bohrung (140) innerhalb des Einspritzpumpengehäuses (113) dicht eingesetzt ist.

9. Elektrische Steuereinrichtung nach Anspruch 8, dadurch gekennzeichnet, dass der Anschlussstopfen (161) am freien Ende ein mit einer Lochscheibe (155) und einem daran gehaltenen, elastischen Ventilteller (157) versehenes Gummi-Pilz-Ventil (154) als Rückschlagventil (150) aufweist.

10. Elektrische Steuereinrichtung nach einem der Ansprüche 1 bis 4, dadurch gekennzeichnet, dass das Rückschlagventil (50) am oder im Gleitschuh (70) zwischen dem Spalt (25) und einer den Spalt (25) mit dem Inneren (15) der Einspritzpumpe (10) verbindenden Ableitung (38, 39) angeordnet ist.

11. Elektrische Steuereinrichtung nach einem der Ansprüche 1 bis 9, dadurch gekennzeichnet, dass der Gleitschuh (170) einteilig in Form eines flachen Ringscheibenausschnittes mit der Vertiefung (143) auf seiner Kontaktfläche (133) ausgebildet ist und an dem im Bereich des geschlossenen Endes (129) ein den Abfuhrkanal (135) enthaltendes Anschlussstück (172) der Ableitung (139) angesetzt ist.

**Claims**

1. Electrical control device for fuel injection pumps for internal-combustion engines, with an electrical regulating unit (11) which is attached by means of its housing (12; 112) to the housing (13; 113) of the fuel injection pump (10; 110) and which comprises an electromechanical regulating element (regulating magnet 9) actuating the control rod (8) of the injection pump (10; 110) and a rotational part (pulse wheel 21; 121) driven to rotate by the cam shaft (14; 114) of the injection pump in the interior (16; 116) of the regulating-unit housing (12; 112), and the interior (16; 116) of which is sealed off relative to the injection-pump interior (15; 115), supplied with lubricating oil, substantially, but at least in the region of passage of the cam shaft (14; 114) from the injection pump to the regulating unit (11), characterized by the following features:

a) arranged in the interior (16; 116) of the regulating-unit housing (12; 112) is a suction device (18; 118) which sucks up the lubricating oil overflowing from the injection pump and collecting in a sump (23; 123) and conveys it back into the interior (15; 115) of the injection pump, and which comprises the rotational part (pulse wheel 21; 121) dipping into the sump (23; 123) by a peripheral portion (22) located near the bottom and a sheet-like element (27; 127) forming a gap (25; 125) between a groove-like recess (43; 143) in its surface and an outer face (end face 26; 126) of the rotational part,

b) the sheet-like element (27; 127) is formed by a sliding shoe (70; 170) which is pressed in a resiliently flexible manner against the outer face of the rotational part (21; 121) under the force of a pressure spring (30; 130) by means of a contact face (33; 133) containing the groove-like recess (43; 143),

c) the recess (43; 143) incorporating the gap (25; 125) has a shallow, U-shaped cross-section and a depth small in relation to its contact face (33; 133) and either constant or decreasing in a wedge-shaped manner from the open inlet end (28; 128) to a closed end (29; 129) in the direction of rotation (arrow 24) and at its closed end (29; 129) communicates with the interior (15; 115) of the injection pump via a discharge channel (35; 135), and

d) the suction device (18; 118) has, on the pressure side, a non-return valve (50; 150) opening towards the interior (15; 115) of the injection pump.

2. Electrical control device according to Claim 1, characterized in that the sliding shoe (70; 170) is held by means of the pressure spring (30; 130) so as to rest by means of its contact face (33; 133) against an end face (26; 126) arranged on the same side as the pump and located on the outer face of the rotational part (21; 121).

3. Electrical control device according to Claim 2, characterized in that the sliding shoe (70; 170) is guided displaceably within the regulating-unit housing (12; 112) in a direction at least approximately at right angles to the end face (26; 126) of the rotational part (21; 121).

4. Electrical control device according to one of Claims 1 to 3, characterized in that the gap (25; 125) opens, in the region of its closed end (29; 129), into a pocket (34; 134) of larger gap cross-section, which itself communicates with the discharge channel (35; 135).

5. Electrical control device according to one of the preceding claims, characterized in that the suction device (118) opens into the interior (115) of the injection pump (110) on the pressure side at a distance from the cam shaft bearing (117) and above this cam shaft bearing (117).

6. Electrical control device according to Claim 5, characterized in that the non-return valve (150) is arranged at the entry end of a branch line (135, 139) and where the latter opens into the interior (115) of the injection pump (110).

7. Electrical control device according to Claim 6, characterized in that the branch line (135, 139) consists of a connection piece (172) located on the sliding shoe (170) and of a branch tube (139) or pipe leading to the upper entry point.

8. Electrical control device according to Claim 7, characterized in that the branch line (135, 139) carries, at the entry end, a connection plug (161) which is fastened to it and which is inserted sealingly into a bore (140) within the injection-pump housing (113).

9. Electrical control device according to Claim 8, characterized in that the connection plug (161) has, at the free end, a rubber mushroom valve (154) functioning as the non-return valve (150) and equipped with a perforated plate (155) and with an elastic valve disc (157) held on the latter.

10. Electrical control device according to one of Claims 1 to 4, characterized in that the non-return valve (50) is arranged on or in the sliding shoe (70) between the gap (25) and a branch line (38, 39) connecting the gap (25) to the interior (15) of the injection pump (10).

11. Electrical control device according to one of Claims 1 to 9, characterized in that the sliding shoe (170) is made in one piece in the form of a flat portion cut out from an annular disc, with the recess (143) in its contact face (133), and a connection piece (172) belonging to the branch line (139) and containing the discharge channel (135) is attached to the sliding shoe (170) in the region of the closed end (129).

**Revendications**

1. Dispositif de régulation électrique pour les pompes d'injection pour moteurs à combustion interne avec un appareil de commande électrique (11) avec son carter (12, 112) monté sur le carter (13, 113) de la pompe d'injection de combustible (10, 110), qui comprend un accessoire de commande (aimant de réglage 9) électromagnétique, actionnant la bielle de commande (8) de la pompe d'injection (10, 110) et une pièce de rotation (roue à impulsion 21, 121) tournant à l'intérieur (16, 116) du carter de l'appareil (12, 112), entraînée par l'arbre à cames (14, 114) de la pompe d'injection, et dont l'intérieur (16, 116) est rendu dans une large mesure étanche par rapport à l'huile de lubrification qui se trouve apportée dans l'intérieur (15, 115) de la pompe d'injection, au moins au voisinage du passage vers l'appareil (11), caractérisé en ce que:

a) dans l'intérieur (16, 116) du carter de l'appareil (12, 112) se trouve un dispositif d'extraction (18, 118), aspirant l'huile de lubrification venant de la pompe d'injection et se rassemblant dans un carter (23, 123) et la retournant dans l'intérieur (15, 115) de la pompe d'injection, qui comprend une pièce de rotation (roue à impulsion (21, 121) plongeant dans le carter (23, 13) et un élément de surface (27, 127) formant un interstice (25, 125) entre une cavité en forme de gouttière (43, 143) sur sa surface et une surface extérieure (surface frontale 26, 126) de la pièce de rotation,

b) l'élément de surface (27, 127) est formé d'un patin de frottement (70, 170) pressé contre la surface extérieure de la pièce de rotation (21, 121) sous l'action d'un ressort de pression (30, 130), avec une surface de contact (33, 133), déformable par ressort, contenant la cavité en forme de gouttière (43, 143),

c) la cavité (43, 143) contenant l'interstice (25, 125) possède une section plate, en forme de U ainsi qu'une profondeur limitée, relativement à sa surface de contact (33, 133) depuis l'extrémité d'entrée ouverte (28, 128) jusqu'à l'extrémité fermée (29, 129) en forme de coin, qui devient plus petite dans le sens de la rotation (flèche 24) ou bien reste constante, reliée par un canal d'évacuation (35, 135) avec l'intérieur (15, 115) de la pompe à injection.

d) le dispositif d'extraction (18, 118) présente, côté refoulement, un clapet anti-retour s'ouvrant vers l'intérieur (15, 115) de la pompe d'injection.

2. Dispositif de régulation électrique selon la revendication 1, caractérisé en ce que le patin de frottement (70; 170) est maintenu appliqué sur la surface extérieure de la pièce de rotation (21, 121) par le ressort d'appui (30; 130) agissant avec sa surface de contact (33; 133) sur une surface frontale située du côté de la pompe.

3. Dispositif de régulation électrique selon la revendication 2, caractérisé en ce que le patin de frottement (70; 170) est guidé en déplacement à l'intérieur du carter de l'appareil (12; 112) dans une direction perpendiculaire à la surface frontale (26; 126) de la pièce de rotation (21; 121) en s'en approchant au minimum.

4. Dispositif de régulation électrique selon les revendications 1 à 3, caractérisé en ce que l'interstice (25; 125) débouche au voisinage de son extrémité fermée (29; 129) dans une cavité (34; 134) de plus grande section d'interstice, qui est de son côté en relation avec le canal de retour.

5. Dispositif de régulation électrique selon l'une des revendications précédentes, caractérisé en ce que le dispositif d'extraction (118) débouche côté refoulement dans un intervalle du palier d'arbre à cames (117) situé en amont de ce palier d'arbre à cames (117), dans l'intérieur de la pompe d'injection (110).

6. Dispositif de régulation électrique selon la revendication 5, caractérisé en ce que le clapet anti-retour (150) est disposé à l'extrémité de l'embouchure d'une conduite d'évacuation (135, 139) et là où elle débouche à l'intérieur (115) de la pompe d'injection (110).

7. Dispositif de régulation électrique selon la revendication 6, caractérisé en ce que la conduite de d'évacuation (135, 139) se compose d'une pièce de raccordement (172) se trouvant sur le patin de frottement (170) et d'un tuyau souple d'évacuation (139) menant jusqu'au point haut de rejet.

8. Dispositif de régulation électrique selon la revendication 7, caractérisé en ce que la conduite d'évacuation (135, 139) porte à l'extrémité d'embouchure un pot de raccordement (161) qui y est fixé et monté étanche dans un perçage (140) situé à l'intérieur du carter de pompe d'injection (113).

9. Dispositif de régulation électrique selon la revendication 8, caractérisé en ce que le pot de raccordement (161) présente, comme clapet anti-retour (150), à l'extrémité libre, une soupape en forme de champignon en caoutchouc (154), prévu avec une rondelle percée (155) et une tête de soupape (157) l'y maintenant.

10. Dispositif de régulation électrique selon l'une des revendications 1 à 4, caractérisé en ce que le clapet anti-retour (50) est disposé sur ou dans le patin de frottement (70), entre l'interstice (25) et une conduite d'évacuation (38, 39) reliant l'interstice avec l'intérieur de la pompe d'injection (10).

11. Dispositif de régulation électrique selon l'une des revendications 1 à 9, caractérisé en ce que le patin de frottement (170) est réalisé en une seule pièce sous la forme d'une encoche en forme de rondelle annulaire plate avec la cavité (143) sur la surface de contact et à laquelle est apportée une pièce de raccordement (172) contenant le canal d'évacuation (135) de la conduite d'évacuation (139), au voisinage de l'extrémité fermée (129).

Fig. 1

## Fig. 2

39

42

36

30

32

41

38

27

52

51

50

43

53

25

35

28

31

24

21

26

## Fig. 3

35

27

25

31

43

28

33

34    29

Fig. 4

Fig. 5

Fig. 6